(19) **Europäisches Patentamt / European Patent Office / Office européen des brevets**

(11) **EP 4 400 836 A1**

(12) **EUROPEAN PATENT APPLICATION**
published in accordance with Art. 153(4) EPC

(43) Date of publication:
**17.07.2024 Bulletin 2024/29**

(21) Application number: **22881330.9**

(22) Date of filing: **12.10.2022**

(51) International Patent Classification (IPC):
*G01N 23/2055* (2018.01)  *G01N 23/2251* (2018.01)
*G06F 18/00* (2023.01)  *G06V 20/64* (2022.01)
*G06N 3/08* (2023.01)

(52) Cooperative Patent Classification (CPC):
**G01N 23/2055; G01N 23/2251; G06F 18/00;
G06N 3/08; G06V 20/64**

(86) International application number:
**PCT/KR2022/015355**

(87) International publication number:
**WO 2023/063703 (20.04.2023 Gazette 2023/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 14.10.2021  KR 20210136499
15.11.2021  KR 20210156578
15.11.2021  KR 20210156580
16.11.2021  KR 20210157137
23.12.2021  KR 20210185805

(71) Applicant: **Lightvision Inc.**
**Seoul 04793 (KR)**

(72) Inventors:
• **JEONG, Jin Ha**
**Yongin-si, Gyeonggi-do 16960 (KR)**
• **RA, Moon Soo**
**Bucheon-si, Gyeonggi-do 14539 (KR)**
• **LEE, Hea Yun**
**Suwon-si, Gyeonggi-do 16517 (KR)**
• **LEE, Hyun Ji**
**Seoul 06074 (KR)**

(74) Representative: **BCKIP Part mbB**
**Siegfriedstraße 8**
**80803 München (DE)**

(54) **TAXONOMY SYSTEM FOR FACILITATING SPACE GROUP REASONING AND METHOD FOR RECOMMENDING ZONE AXIS IN CONNECTION THEREWITH**

(57)  A method and a system for providing a parking service are disclosed. An SADP classification scheme comprises plural labels. Here, the labels are constructed by grouping SADP (Selected Area Diffraction Pattern) images photographed through a TEM (Transmission Electron Microscope, TEM) according to specific reference, and the labels are matched with space groups of a classification scheme in crystallography.

FIG. 6

Diffraction pattern analyzing unit — 100

Classification scheme matching unit — 102

Diffraction pattern classifying algorithm learning unit — 104

Probability-based space group inferring unit — 106

Zone axis recommending unit — 600

EP 4 400 836 A1

**Description**

TECHNICAL FIELD

The present disclosure relates to a classification system with easy space group inference and a method of recommending a zone axis in the same.

The present disclosure relates to a method of inferring space groups of an object and recommending a zone axis for next photographing.

BACKGROUND ART

Selected Area Diffraction Pattern (SADP) is to generate diffraction of electrons in an image type after emitting an electron beam to an object to be analyzed. The SADP is shown in two-dimensional image though the object has three-dimensional crystal structure, and thus it is difficult to specify definitely a space group of the object using one SADP image. To solve this problem, Ziletti et al. proposes a method of generating one diffraction fingerprint using six SADP images, learning/analyzing the generated diffraction fingerprint and then specifying a space group of the object.

The diffraction fingerprint is obtained by using SADP images which are generated by photographing the object through a TEM with rotating the object in six directions. The rotation is performed based on a zone axis [001]. Here, the diffraction fingerprint is generated by accumulating SADP images obtained by photographing the object under rotating the object by $\pm45°$ in an x axis in a red channel of RGB, accumulating SADP images obtained by photographing the object under rotating the object by $\pm45°$ in an y axis in a green channel and accumulating SADP images obtained by photographing the object under rotating the object by $\pm45°$ in a z axis in a blue channel.

A propagation direction of the electron beam and the zone axis [001] of the object should be aligned at first to generate the diffraction fingerprint. It is impossible to align the propagation direction of the electron beam and the zone axis [001] because a crystal structure of the object is not known.

The SADP image obtained by photographing the object with rotating by $\pm45°$ in an x direction, an y direction or a z direction can't include meaningful information if the object has the crystal structure out of cubic system and hexagonal system, though the propagation direction of the electron beam is aligned with the zone axis [001] of the object.

SUMMARY

The present disclosure is to provide a classification system inferable easily a space group and a method of constructing a classification scheme in the same.

The present disclosure is to provide a method of inferring space groups candidate of an object and recommending a zone axis for next photographing.

An SADP classification scheme according to an embodiment of the present disclosure includes plural labels. Here, the labels are constructed by grouping SADP (Selected Area Diffraction Pattern) images photographed through a TEM (Transmission Electron Microscope, TEM) according to specific reference, and the labels are matched with space groups of a classification scheme in crystallography.

A classification system according to an embodiment of the present disclosure includes a diffraction pattern analyzing unit configured to generate an SADP classification scheme having multiple labels in 2D pattern by grouping SADP images photographed by a TEM according to specific reference; and a classification scheme matching unit configured to match the SADP classification scheme with a classification scheme in crystallography. Here, the classification scheme in crystallography includes space groups and information concerning zone axes, and labels in the SADP classification scheme are one-to-one matched with the space groups or the labels are matched with the space groups in one-to-multi relation.

A classification system according to another embodiment of the present disclosure includes a diffraction pattern analyzing unit configured to generate an SADP classification scheme having multiple labels by grouping SADP images photographed by a TEM according to specific reference; and a probability-based space group inferring unit configured to infer probabilistically a space group of an object by analyzing a classification scheme in crystallography matched with a label obtained by applying an algorithm learned by machine learning to an SADP image of the object. Here, the classification scheme in crystallography includes a space group and information concerning a zone axis.

A classification system according to still another embodiment of the present disclosure includes a learning unit configured to learn a classifying algorithm to classify SADP image photographed by a TEM through machine learning; and a probability-based space group inferring unit configured to infer probabilistically a space group of an object by analyzing a classification scheme in crystallography matched with a label obtained by applying the classifying algorithm to an SADP image of the object. Here, the labels are constructed by grouping the SADP images according to specific reference and are matched space groups in the classification scheme in crystallography.

A recording medium readable by a computer recording a program code according to one embodiment of the present disclosure, wherein the program code is used for performing a method comprises generating new SADP classification scheme having multiple labels by grouping SADP images photographed by a TEM according to specific reference; and matching the new SADP classification scheme with a classification scheme in crystallography. Here, the classification scheme in crystallography includes space groups and information concerning zone axes, and labels in the SADP classification scheme are one-to-one matched with the space groups or the labels are matched with the space groups in one-to-multi relation.

A classification system according to still another embodiment of the present disclosure includes a classification scheme matching unit configured to match an SADP classification scheme having multiple labels in 2D pattern with a classification scheme in crystallography; and a zone axis recommending unit configured to recommend a zone axis for next photographing of an object, electron beam being emitted to the zone axis. Here, the classification scheme in crystallography includes space groups and information concerning zone axes, and labels in the SADP classification scheme are one-to-one matched with the space groups or the labels are matched with the space groups in one-to-multi relation.

A classification system according to still another embodiment of the present disclosure includes a table configured to including labels having a space group in crystal structure and information concerning a zone axis; and a zone axis recommending unit configured to recommend a zone axis to which electron beam is to be emitted for next photographing of an object. Here, the recommended zone axis is one of zone axes included in the labels.

A classification system according to still another embodiment of the present disclosure includes a zone axis recommending unit configured to recommend a zone axis to which electron beam is to be emitted for next photographing of an object from labels having space groups in crystal structure and information concerning zone axes matched with the space groups. Here, the zone axis recommending unit includes a calculation unit configured to calculate degree of randomness about zone axes in the labels; and a recommending unit configured to recommend a zone axis having lowest degree of randomness as the zone axis for next photographing depending on the calculated result.

A classification system and a method of constructing a classification scheme in the same according to the present disclosure cluster similar SADP images based on specific reference and generate new classification scheme by using clustered SADP images. A space group may be easily inferred by using the new classification scheme.

Additionally, the classification system may infer a space group of an object by using one or more SADP images obtained by photographing the object through a TEM, without supporting of a crystallography expert.

Furthermore, the classification system recommends a zone axis capable of specifying definitely a space group in next photographing, thereby minimizing a stress applied to the object while analyzing the object.


BRIEF DESCRIPTION OF DRAWINGS

Example embodiments of the present disclosure will become more apparent by describing in detail example embodiments of the present disclosure with reference to the accompanying drawings, in which:

FIG. 1 is a view illustrating a classification system according to an embodiment of the present disclosure;
FIG. 2 is a view illustrating structure of a classification scheme and matching of classification schemes according to an embodiment of the present disclosure;
FIG. 3 is a view illustrating a reference of classifying an SADP images according to an embodiment of the present disclosure;
FIG. 4 is a view illustrating a process of inferring a space group according to an embodiment of the present disclosure;
FIG. 5 is a view illustrating SADP images having similar diffraction patterns while belonging to different space groups;
FIG. 6 is a view illustrating a classification system according to another embodiment of the present disclosure;
FIG. 7 is a view illustrating a table indicating matching of an SADP classification scheme in crystallography and new SADP classification scheme classified easily by a computer;
FIG. 8 is a view illustrating a zone axis recommending unit according to an embodiment of the present disclosure.


DETAILED DESCRIPTION

In the present specification, an expression used in the singular encompasses the expression of the plural, unless it has a clearly different meaning in the context. In the present specification, terms such as "comprising" or "including," etc., should not be interpreted as meaning that all of the elements or operations are necessarily included. That is, some of the elements or operations may not be included, while other additional elements or operations may be further included. Also, terms such as "unit," "module," etc., as used in the present specification may refer to a part for processing at least one function or action and may be implemented as hardware, software, or a combination of hardware and software.

The present disclosure relates to a classification system and a method of constructing a classification scheme in the same, and it may reconstruct a classification scheme in crystallography to new classification scheme classified easily by a computer.

Here, the new classification scheme may include plural labels generated by classifying SADP (Selected Area Diffraction Pattern) images based on specific reference. That is, SADP images with common feature or similar structure may belong to the same label.

Additionally, the classification system may match the classification scheme in crystallography with the new classification scheme classified easily by the computer and infer a space group of an object by analyzing one or more SADP images obtained by photographing the object by a transmission electron microscope (TEM) through an artificial intelligence, especially a machine learning, e.g., a deep learning.

Hereinafter, embodiments of the disclosure will be described in detail with reference to accompanying drawings.

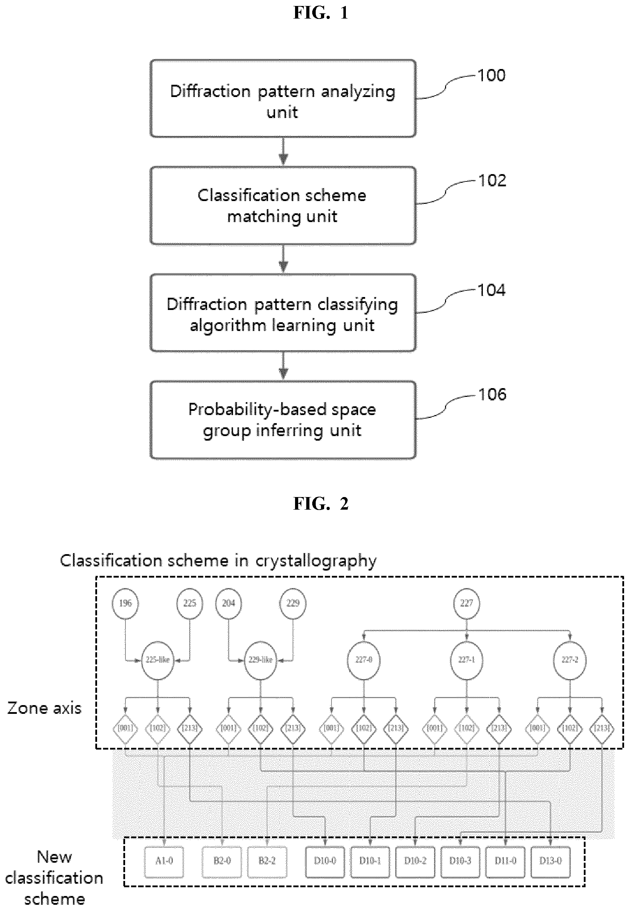

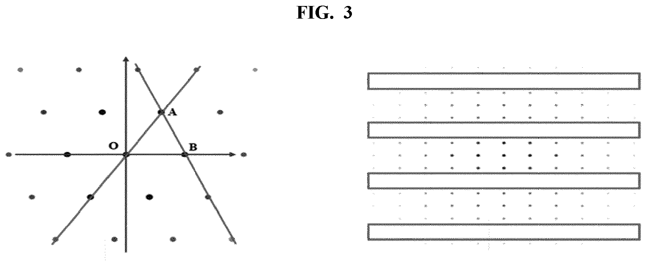

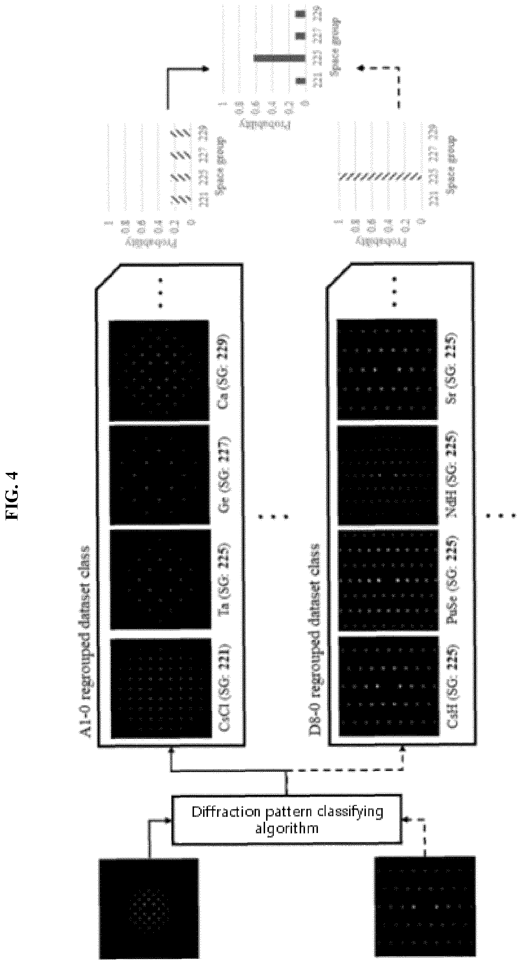

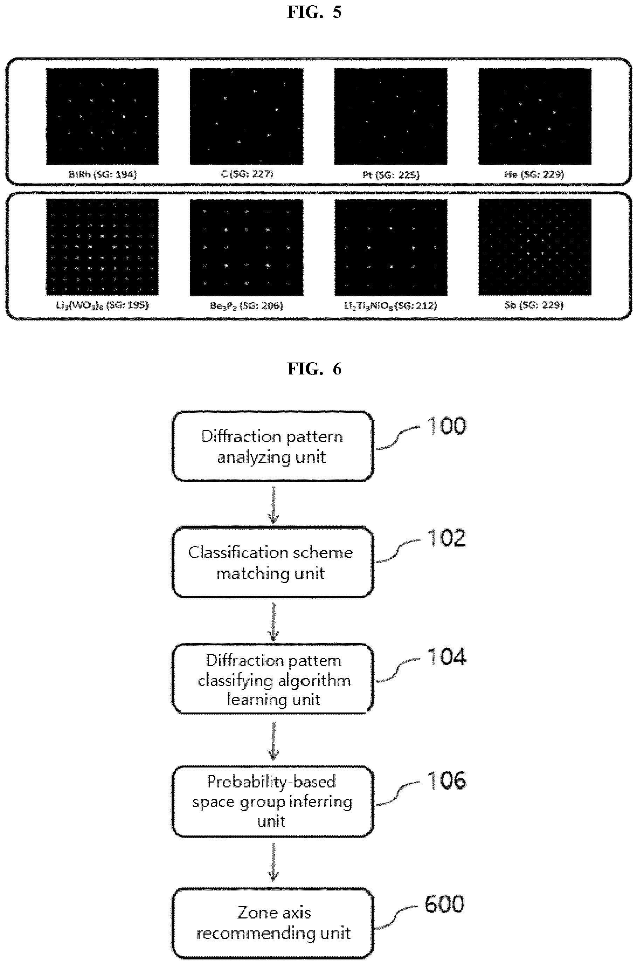

FIG. 1 is a view illustrating a classification system according to an embodiment of the present disclosure, FIG. 2 is a view illustrating structure of a classification scheme and matching of classification schemes according to an embodiment of the present disclosure, and FIG. 3 is a view illustrating a reference of classifying an SADP images according to an embodiment of the present disclosure. FIG. 4 is a view illustrating a process of inferring a space group according to an embodiment of the present disclosure, and FIG. 5 is a view illustrating SADP images having similar diffraction patterns while belonging to different space groups.

In FIG. 1, the classification system of the present embodiment constructs new classification scheme classified easily by the computer different from a classification scheme in crystallography, and it may include a diffraction pattern analyzing unit 100, a classification scheme matching unit 102, a diffraction pattern classifying algorithm learning unit 104, a probability-based space group inferring unit 106 and a controller (not shown) for controlling their operation.

The diffraction pattern analyzing unit 100 may generate new classification scheme (SADP classification scheme) by grouping SADP images classified easily by the computer using an internal angle information of a triangle and forbidden reflection information obtained through structure factor calculation, wherein the triangle includes a diffraction point and two diffraction points nearest to the diffraction point. The diffraction pattern analyzing unit 100 may be referred to as a classification scheme generating unit because the diffraction pattern analyzing unit 100 generates the classification scheme.

For example, the diffraction pattern analyzing unit 100 may generate new classification scheme by grouping SADP images similar in appearance using internal angle information($\angle$ AOB, $\angle$ OAB) of a triangle and forbidden reflection information shown in a right side in FIG. 3, wherein the triangle includes a diffraction point(O) and two diffraction points(A, B) nearest to the diffraction point(O) as shown in a left side in FIG. 3. Here, the new classification scheme may be divided into a square primitive A, a rectangle primitive B, a hexagonal primitive C and an oblique primitive D based on a basic structure having two-dimensional lattice.

In another embodiment, the diffraction pattern analyzing unit 100 may generate new classification scheme by grouping SADP images using one diffraction point or internal angle information between at least three diffraction points not internal angle points between two diffraction points nearest to a diffraction point.

In still another embodiment, the diffraction pattern analyzing unit 100 may generate new classification scheme by grouping SADP images using only one of the internal angle information and the forbidden reflection information.

In still another embodiment, the diffraction pattern analyzing unit 100 may generate new classification scheme by grouping the SADP images using average angle of angles between central diffraction point and its surrounding diffraction points.

In FIG. 2, a classification scheme in crystallography includes space groups. Here, space groups with similar structure may exist in the classification scheme.

In a process of constructing new classification scheme, the classification system may obtain SADP images related to space groups by using the TEM. Indication such as "001", etc. in FIG. 2 may mean a direction of an electron beam emitted to an object. For example, "001" may mean a direction of the electron beam emitted in a parallel to a Z axis. Here, plural SADP images having similar or the same structure may exist when the SADP images are classified based on specific reference.

The diffraction pattern analyzing unit 100 may generate new classification scheme by grouping the SADP images using the internal angle information ($\angle$ AOB, $\angle$ OAB) of the triangle including diffraction points and the forbidden reflection information. Here, classification of the SADP images to the new classification scheme may be performed by a diffraction pattern classifying algorithm (model) as shown in FIG. 4.

For example, the diffraction pattern analyzing unit 100 may define 60 labels by grouping SADP images obtained based on 16 zone axes ([0 0 1], [1 0 1], [1 0 2], [1 0 3], [1 0 4], [1 1 1], [1 1 2], [1 1 3], [1 1 4], [2 0 3], [2 1 2], [2 1 3], [2 1 4], [2 2 3], [3 1 3], [3 2 3]) related to five space groups (213, 221, 225, 227, 229). Here, the SADP images may be classified to 112 labels based on a classification scheme in crystallography. The number of the labels is smaller than that of the labels in the classification scheme in crystallography due to the grouping.

FIG. 5 shows SADP images, in different space groups, which belong to the same label. That is, the SADP images corresponding to multiple space groups may belong to one label.

On the other hand, the reference for grouping the SADP images may be variously modified as long as new classification scheme is generated by using the diffraction points.

The classification scheme matching unit 102 may match the classification scheme in crystallography expressed in the space group and the zone axis with an SADP classification scheme classified easily by the computer as shown in FIG. 2. That is, the classification scheme matching unit 102 may match the space groups in 3D structure with the labels in 2D structure.

The label and the space group are fundamentally matched in one-to-multi relation, but may be one-to-one matched depending on a shape of the SADP image. That is, an SADP image corresponding to specific space group and specific zone axis may belong to one label. In this case, information concerning correct space group and zone axis may be searched by inputting an SADP image.

The diffraction pattern classifying algorithm learning unit 104 may learn a model (diffraction pattern classifying algorithm) to classify the SADP images through a machine learning.

In an embodiment, the diffraction pattern classifying algorithm learning unit 104 may generate and learn the diffraction pattern classifying algorithm by using AlexNet, Inception v3, ResNet, DenseNet, etc. which are off-the-shelf deep learning model.

The probability-based space group inferring unit 106 may infer probabilistically a space group of the object by analyzing the classification scheme in crystallography matched with the label obtained by applying the diffraction pattern classifying algorithm to the SADP image of the object.

For example, the probability-based space group inferring unit 106 may infer probabilistically a space group of the object in crystal structure by analyzing the classification scheme in crystallography matched with the label obtained by applying respectively the diffraction pattern classifying algorithm to two SADP images for the object as shown in FIG. 4.

In an embodiment, the probability-based space group inferring unit 106 may draw final probability in consideration of probabilities inferred from multiple SADP images. In FIG. 4, the final probability equals to an average of the inferred probabilities. However, the probability-based space group inferring unit 106 may accumulate the inferred probabilities and determine a space group corresponding to maximum value of the accumulated inferred probabilities as the space group of the object.

Referring to two SADP images inputted to the diffraction pattern classifying algorithm in FIG. 4, upper images are classified to an A1-0 label through the diffraction pattern classifying algorithm, the A1-0 label is matched with a space group 221, a space group 225, a space group 227 and a space group 229 in one-to-multi relation, and thus it is inferred that a probability of the object belonging to each of the space groups 221, 225, 227 and 229 is 25%. Whereas, lower images are classified to a D8-0 label through the diffraction pattern classifying algorithm, the D8-0 label is one-to-one matched with the space group 225, and thus it is inferred that a probability of the object belonging to the space group 225 is 100%. Consequently, it is inferred that a probability of the object belonging to the space group 225 is 62.5% and a probability of the object belonging to the space group 221, 227 or 229 is 12.5%, when average of the inferred two probabilities is considered.

Conventional technique infers a space group of an object by using the classification scheme in crystallography. Particularly, conventional technique obtains six SADP images through TEM and detects a space group to which the object belongs by analyzing the obtained SADP images. However, it is difficult to perform this process because a user emits the electron beam to the object with rotating the object in six directions. As a result, only an expert can perform this process. Furthermore, it is difficult to emit the electron beam with rotating accurately the object in six directions, and thus the space group is not correctly inferred.

Whereas, the classification system of the present disclosure may generate multiple labels by grouping the SADP images and infer probabilistically the space group of the object by analyzing the space group matched with the label. Accordingly, the user may infer the space group of the object by using at least one SADP image photographed by the TEM without helping of a crystallography expert.

Briefly, the classification system of the present disclosure may match 3D classification scheme in crystallography with new 2D classification scheme formed by grouping the SADP images and infer the space group of the object by analyzing the space group matched with the label to which the SADP image obtained through the TEM belongs.

Advantages when the new classification scheme is used are follows.

1. It is possible to infer the space group of the object with high accuracy though usual machine learning techniques are used.

2. It is possible to infer probabilistically the space group of the object though one SADP image is used and infer more accurately the space group of the object by considering synthetically inferred probabilities for multiple SADP images when the SADP images exist.

3. It is possible to recommend a zone axis at which it is expected that inferred probability of the space group increases when next SADP image is photographed, by analyzing SADP image photographed at present in the event that a TEM machine and the classification system of the present disclosure are together used.

It is necessary to analyze three or more SADP images to determine 3D structure because the SDAP image is a 2D image, when the user detects a crystal structure of the object using the TEM. The SADP images are obtained with changing a scan direction of the electron beam. In this time, many times scanning of the electron beam should be performed if accurate scan direction of the electron beam is not determined. As a result, the object may be broken due to energy of the electron beam. Accordingly, many time scanning of the electron beam should not be performed, and it is necessary to determine accurate scan direction of the electron beam. It is possible to recommend accurate scan direction of the electron beam, i.e. recommend accurate zone axis when the classification system of the present disclosure is employed.

Hereinafter, a method of recommending a scan direction of the electron beam, i.e. zone axis will be described in detail.

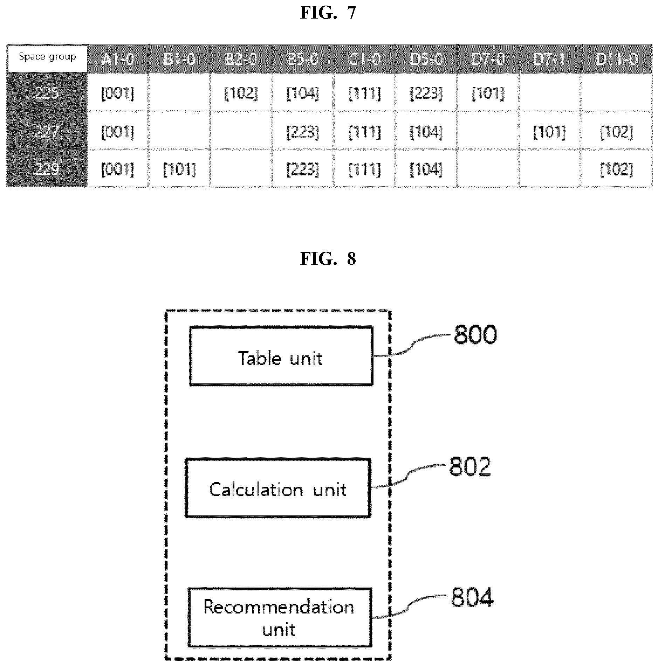

FIG. 6 is a view illustrating a classification system according to another embodiment of the present disclosure, FIG. 7 is a view illustrating a table indicating matching of an SADP classification scheme in crystallography and new SADP classification scheme classified easily by a computer, and FIG. 8 is a view illustrating a zone axis recommending unit according to an embodiment of the present disclosure.

In FIG. 6, the classification system of the present embodiment may include a diffraction pattern analyzing unit 100, a classification scheme matching unit 102, a diffraction pattern classifying algorithm learning unit 104, a probability-based space group recommending unit 106 and a zone axis recommending unit 600. Since the other elements except the zone axis recommending unit 600 are the same as in above embodiment, any further description concerning the same elements will be omitted.

Function of the zone axis recommending unit 600 will be described after a method of recommending the zone axis is conceptually described with reference to a drawing FIG. 7. A table in FIG. 7 includes a space group in crystal structure and labels having information concerning the zone axis.

In FIG. 7, it is assumed that an A1-0 label is obtained by analyzing inputted SADP image while the 3D SADP classification scheme in crystallography is matched with new 2D SADP classification scheme. In this case, the A1-0 label is matched with a zone axis [001] of a space group 225, a zone axis [001] of a space group 227 and a zone axis [001] of a space group 229 in one-to-multi relation. Accordingly, the inputted SADP image can belong to three space groups 225, 227 and 229, and thus the space group of an object corresponding to the inputted SADP image is not specified. However, a user can accurately see information concerning the zone axis [001].

It is necessary to recommend a zone axis capable of specifying definitely a space group for photographing of next SADP image through the TEM. Accordingly, the present disclosure provides a method of recommending a zone axis capable of specifying clearly the space group, the object being rotated in a direction of the zone axis.

A C1-0 label will be obtained when an SADP image obtained by next photographing is analyzed if the object is aligned with a zone axis [111] in next photographing. The C1-0 label can belong to the space group 225, the space group 227 and the space group 229, and thus the space group of the object is not specified clearly. Accordingly, the classification system does not recommend the zone axis [111].

A B2-0 label or a D11-0 label will be obtained when an SADP image obtained by next photographing is analyzed if the object is aligned with a zone axis [102] in next photographing. If the B2-0 label is obtained, it is quite evident that the object belongs to the space group 225. However, if the D11-0 label is obtained, it is difficult to know what space group the object belongs to of the space groups 227 and 229. In this case, specifying of the space group when the object is aligned with the zone axis [102] is more clear than that when the object is aligned with the zone axis [111], but the space group is also not specified definitely. Accordingly, the classification system does not recommend the zone axis [102].

A B 1-0 label, a D7-0 label or a D7-1 label will be obtained when an SADP image obtained by next photographing is analyzed if the object is aligned with a zone axis [101] in next photographing. It is quite evident that the object belongs to the space group 229 if the B1-0 label is obtained, it is clear that the object belongs to the space group 225 if the D7-0 label is obtained, and it is definite that the object belongs to the space group 227 if the D7-1 label is obtained. That is, the space group of the object is clearly specified in every case. Accordingly, the classification system may recommend the zone axis [101].

On the other hand, a zone axis [104] and a zone axis [223] exist if the object belongs to a B5-0 label according to analysis of the SADP image, and thus accurate zone axis is not specified. The classification system may select a zone axis capable of specifying more efficiently the space group of a zone axis to be aligned for next photographing obtained through above process in case of the zone axis [104] and a zone axis to be aligned for next photographing obtained through above process in case of the zone axis [223].

The number and a time for scanning the electron beam to the object may considerably reduce when above process is connected to a TEM hardware, and thus it is possible to analyze efficiently the object.

Shortly, the zone axis recommending unit 600 may discriminate whether a space group is clearly specified when corresponding zone axis is selected for next TEM SADP photographing, perform sequentially the discriminating process about every zone axis usable for next TEM SADP photographing and recommend a zone axis at which the space group is definitely specified through the discriminated result.

In an embodiment, the zone axis recommending unit 600 may recommend a zone axis of a label matched with one space group as next zone axis. That is, the zone axis recommending unit 600 may recommend a zone axis with very high discernment about the space group. Preferably, the zone axis recommending unit 600 may calculate discernment of the zone axes and recommend the zone axis with highest discernment as a zone axis for new TEM SADP photographing.

Of course, the zone axis recommending unit 600 may recommend a zone axis corresponding to a label matched with two space groups when the zone axis corresponding to the label matched with one space group does not exist. However, the zone axis recommending unit 600 may not recommend a zone axis corresponding to a label matched with three space groups when the zone axis corresponding to the label matched with two space groups does not exist. This is because a probability of specifying the space group becomes very lower.

To recommend the zone axis, the zone axis recommending unit 600 may calculate discernment about a space group of a zone axis to be aligned for next photographing through calculation of an entropy(H(X)) in following equation 1.

【Equation 1】

$$H(X) = -\sum_{j=1}^{i=k} P(x_j) \sum_{i=1}^{i=n} P(x_i) \log_n P(x_i)$$

Here, $p(x_j)$ means a probability of jth label of specific zone axis, k indicates total number of labels, $p(x_i)$ means a probability that the object belongs to ith space groups in corresponding label, and n indicates total number of space groups in corresponding label.

Since the entropy indicates degree of randomness, high entropy means low discernment about the space group, and low entropy indicates high discernment about the space group.

Accordingly, the zone axis recommending unit 600 may calculate an entropy about every zone axis or preset zone axes, and recommend a zone axis having lowest entropy as the zone axis for next photographing of an SADP image.

A probability that the object belongs the space group 225, the space group 227 or the space group 229 is respectively 1/3 if the A1-0 label is obtained by analyzing the inputted SADP image, and thus calculation of the entropy about the A1-0 label is following equation 2. Maximum value of the entropy is 1. The calculated entropy is 1, and thus the zone axis recommending unit 600 may discriminate that the space group 225, the space group 227 and the space group 229 don't have any discernment.

【Equation 2】

$$H(X) = -\sum_{i=1}^{3} P(x_i) \log_3 P(x_i) = -3 \times \frac{1}{3} \times \log_3 \frac{1}{3} = -3 \times \frac{1}{3} \times \frac{\log(1/3)}{\log(3)} = 1$$

A B2-0 label or a D11-0 label may be obtained with the object is aligned with a zone axis [102] after the A1-0 label is obtained. In the B2-0 label, a probability that the object belongs to the space group 225 is 100%. In the D11-0 label, a probability that the object belongs to the space group 227 is 50%, and a probability that the object belongs to the space group 229 is 50%. Since it is impossible to see what label of the B2-0 label and the D11-0 label is obtained, it is assumed that a probability of each of the B2-0 label and the D11-0 label is 50%. In this case, entropy calculation about the zone axis [102] follows as equation 3. Discernment when the object is aligned with the zone axis [102] is greater than that when the A1-0 label is obtained because an entropy of the B2-0 label or the D11-0 label is lower than that of the A1-0 label.

【Equation 3】

$$H(X) = -\frac{1}{2}(1 \times \log_3 1) - \frac{1}{2}\left(2 \times \frac{1}{2} \times \log_3 \frac{1}{2}\right) = 0.3155$$

A B1-0 label, a D7-0 label or a D7-1 label may be obtained with the object is aligned with a zone axis [10 1]. In the B1-0 label, a probability that the object belongs to the space group 229 is 100%. In the D7-0 label, a probability that the object belongs to the space group 227 is 100%. In the D7-1 label, a probability that the object belongs to the space group 227 is 100%. Since it is impossible to see what label of the B1-0 label, the D7-0 label and the D7-1 label is obtained, it is assumed that a probability of each of the B1-0 label, the D7-0 label and the D7-1 label is 33%. In this case, entropy calculation about the zone axis [101] follows as equation 4.

【Equation 4】

$$H(X) = -3 \times \frac{1}{3}(1 \times \log_3 1) = 0$$

The entropy when the object is aligned with the zone axis [101] is lower than that when the object is aligned with the zone axis [102]. Accordingly, the zone axis recommending unit 600 may recommend the zone axis [101] as a direction in which the electron beam is to be scanned. As a result, the electron beam will be emitted in the direction of the zone axis [101].

Briefly, the zone axis recommending unit 600 may calculate entropies about every zone axis or entropies about multiple zone axes, and recommend a zone axis having lowest entropy as a zone axis for photographing of next SADP image. Accordingly, a user may infer a space group of the object using the SADP image obtained by photographing the object through the TEM without helping of the crystallography expert. Additionally, the classification system may minimize stress applied to the object when the object is analyzed because it recommends the zone axis capable of specifying the most effectively the zone axis when next photographing is performed.

On the other hand, the zone axis recommending unit 600 may recommend randomly one of the zone axes when plural zone axes having smallest entropy exist.

In the above, degree of randomness is calculated by using the entropy. However, a method of calculating the degree of randomness may be variously modified as long as the zone axis is recommended by calculating the degree of randomness.

In FIG. 8, the zone axis recommending unit 600 may include a table unit 800, a calculation unit 802 and a recommendation unit 804.

The table unit 800 may include labels having information concerning zone axes matched with the space groups in crystal structure.

The calculation unit 802 may calculate the degree of randomness, i.e. the entropies about the zone axes which belong to the labels.

The recommendation unit 804 may recommend a zone axis having lowest degree of randomness as a zone axis for next photographing, depending on the calculated result.

Components in the embodiments described above can be easily understood from the perspective of processes. That is, each component can also be understood as an individual process. Likewise, processes in the embodiments described above can be easily understood from the perspective of components.

Also, the technical features described above can be implemented in the form of program instructions that may be performed using various computer means and can be recorded in a computer-readable medium. Such a computer-readable medium can include program instructions, data files, data structures, etc., alone or in combination. The program instructions recorded on the medium can be designed and configured specifically for the present invention or can be a type of medium known to and used by the skilled person in the field of computer software. Examples of a computer-readable medium may include magnetic media such as hard disks, floppy disks, magnetic tapes, etc., optical media such as CD-ROM's, DVD's, etc., magneto-optical media such as floptical disks, etc., and hardware devices such as ROM, RAM, flash memory, etc. Examples of the program of instructions may include not only machine language codes produced by a compiler but also high-level language codes that can be executed by a computer through the use of an interpreter, etc. The hardware mentioned above can be made to operate as one or more software modules that perform the actions of the embodiments of the invention, and vice versa.

The embodiments of the invention described above are disclosed only for illustrative purposes. A person having ordinary skill in the art would be able to make various modifications, alterations, and additions without departing from the spirit and scope of the invention, but it is to be appreciated that such modifications, alterations, and additions are encompassed by the scope of claims set forth below.

**Claims**

1. An SADP classification scheme comprising:

   plural labels,
   wherein the labels are constructed by grouping SADP (Selected Area Diffraction Pattern) images photographed through a TEM (Transmission Electron Microscope, TEM) according to specific reference, and the labels are matched with space groups of a classification scheme in crystallography.

2. The SADP classification scheme of claim 1, wherein the specific reference is information concerning an internal angle of a triangle including one diffraction point and two diffraction points nearest to the one diffraction point and forbidden reflection information in the SADP image,
   and wherein SADP images having similar information concerning the internal angle and similar forbidden reflection information belong to the same label.

3. The SADP classification scheme of claim 2, wherein the SADP images are images obtained based on zone axes of the space groups, and the number of the labels is smaller than the product of the number of the space groups and the number of the zone axes.

4. A classification system comprising:

   a diffraction pattern analyzing unit configured to generate an SADP classification scheme having multiple labels in 2D pattern by grouping SADP images photographed by a TEM according to specific reference; and
   a classification scheme matching unit configured to match the SADP classification scheme with a classification scheme in crystallography,
   wherein the classification scheme in crystallography includes space groups and information concerning zone axes, and labels in the SADP classification scheme are one-to-one matched with the space groups or the labels are matched with the space groups in one-to-multi relation.

5. The classification system of claim 4, wherein the specific reference is information concerning an internal angle of a triangle including one diffraction point and two diffraction points nearest to the one diffraction point and forbidden reflection information in the SADP image,
   and wherein SADP images having similar information concerning the internal angle and similar forbidden reflection information belong to the same label.

6. The classification system of claim 4, further comprising:

   a learning unit configured to learn a diffraction pattern classifying algorithm to classify the SADP images through a machine learning; and
   a probability-based space group inferring unit configured to infer probabilistically a space group of an object by analyzing the classification scheme in crystallography matched with a label obtained by applying the diffraction pattern classifying algorithm to an SADP image of the object.

7. The classification system of claim 6, wherein the probability-based space group inferring unit draws final probability in consideration of probabilities inferred from the SADP images, or accumulates the inferred probabilities and selects a space group having maximum value of the accumulated probabilities.

8. A classification system comprising:

   a diffraction pattern analyzing unit configured to generate an SADP classification scheme having multiple labels by grouping SADP images photographed by a TEM according to specific reference; and

a probability-based space group inferring unit configured to infer probabilistically a space group of an object by analyzing a classification scheme in crystallography matched with a label obtained by applying an algorithm learned by machine learning to an SADP image of the object,

wherein the classification scheme in crystallography includes a space group and information concerning a zone axis.

9. The classification system of claim 8, wherein the specific reference is information concerning an internal angle of a triangle including one diffraction point and two diffraction points nearest to the one diffraction point and forbidden reflection information in the SADP image,

and wherein SADP images having similar information concerning the internal angle and similar forbidden reflection information belong to the same label.

10. The classification system of claim 8, wherein the probability-based space group inferring unit draws final probability in consideration of probabilities inferred from the SADP images, or accumulates the inferred probabilities and selects a space group having maximum value of the accumulated probabilities.

11. A classification system comprising:

a learning unit configured to learn a classifying algorithm to classify SADP image photographed by a TEM through machine learning; and

a probability-based space group inferring unit configured to infer probabilistically a space group of an object by analyzing a classification scheme in crystallography matched with a label obtained by applying the classifying algorithm to an SADP image of the object,

wherein the labels are constructed by grouping the SADP images according to specific reference and are matched space groups in the classification scheme in crystallography.

12. The classification system of claim 11, wherein the specific reference is information concerning an internal angle of a triangle including one diffraction point and two diffraction points nearest to the one diffraction point and forbidden reflection information in the SADP image,

and wherein SADP images having similar information concerning the internal angle and similar forbidden reflection information belong to the same label.

13. A recording medium readable by a computer recording a program code, wherein the program code is used for performing a method comprising:

generating new SADP classification scheme having multiple labels by grouping SADP images photographed by a TEM according to specific reference; and

matching the new SADP classification scheme with a classification scheme in crystallography,

and wherein the classification scheme in crystallography includes space groups and information concerning zone axes, and labels in the SADP classification scheme are one-to-one matched with the space groups or the labels are matched with the space groups in one-to-multi relation.

14. A classification system comprising:

a classification scheme matching unit configured to match an SADP classification scheme having multiple labels in 2D pattern with a classification scheme in crystallography; and

a zone axis recommending unit configured to recommend a zone axis for next photographing of an object, electron beam being emitted to the zone axis,

wherein the classification scheme in crystallography includes space groups and information concerning zone axes, and labels in the SADP classification scheme are one-to-one matched with the space groups or the labels are matched with the space groups in one-to-multi relation.

15. The classification system of claim 14, wherein the zone axis recommending unit recommends a zone axis corresponding to a label matched with one space group as the zone axis for next photographing.

16. The classification system of claim 14, wherein the zone axis recommending unit calculates degree of randomness about zone axes in the labels, does not recommend a zone axis with considerable high degree of randomness but recommend a zone axis having considerable low degree of randomness depending on the calculated result.

**17.** The classification system of claim 16, wherein the zone axis recommending unit recommends a zone axis with lowest degree of randomness as the zone axis for next photographing depending on the calculated result.

**18.** The classification system of claim 17, wherein the zone axis recommending unit calculates an entropy in following equation as the degree of randomness and recommends a zone axis having lowest entropy as the zone axis for next photographing.

[ Equation ]

$$H(X) = -\sum_{j=1}^{j=k} P(x_j) \sum_{i=1}^{i=n} P(x_i) \log {}_n P(x_i)$$

Here, $p(x_j)$ means a probability of jth label of specific zone axis, k indicates total number of labels, $p(x_i)$ means a probability that the object belongs to ith space groups in corresponding label, and n indicates total number of space groups in corresponding label.

**19.** The classification system of claim 18, wherein the zone axis recommending unit recommends randomly one of plural zone axes when the zone axes having lowest entropy exist.

**20.** A classification system comprising:

a table configured to including labels having a space group in crystal structure and information concerning a zone axis; and
a zone axis recommending unit configured to recommend a zone axis to which electron beam is to be emitted for next photographing of an object,
and wherein the recommended zone axis is one of zone axes included in the labels.

**21.** The classification system of claim 20, wherein the zone axis recommending unit recommends a zone axis corresponding to a label matched with one space group as the zone axis for next photographing.

**22.** The classification system of claim 20, wherein the zone axis recommending unit calculates degree of randomness about zone axes in the labels, and recommends a zone axis having lowest degree of randomness as the zone axis for next photographing depending on the calculated result.

**23.** A classification system comprising:

a zone axis recommending unit configured to recommend a zone axis to which electron beam is to be emitted for next photographing of an object from labels having space groups in crystal structure and information concerning zone axes matched with the space groups,
wherein the zone axis recommending unit includes
a calculation unit configured to calculate degree of randomness about zone axes in the labels; and
a recommending unit configured to recommend a zone axis having lowest degree of randomness as the zone axis for next photographing depending on the calculated result.

**24.** The classification system of claim 23, wherein the zone axis recommending unit calculates an entropy in following equation as the degree of randomness and recommends a zone axis having lowest entropy as the zone axis for next photographing.

[ Equation ]

$$H(X) = -\sum_{j=1}^{j=k} P(x_j) \sum_{i=1}^{i=n} P(x_i) \log {}_n P(x_i)$$

Here, $p(x_j)$ means a probability of jth label of specific zone axis, k indicates total number of labels, $p(x_i)$ means a

probability that the object belongs to ith space groups in corresponding label, and n indicates total number of space groups in corresponding label.

**FIG. 1**

**FIG. 2**

Classification scheme in crystallography

FIG. 3

**FIG. 4**

**FIG. 5**

BiRh (SG: 194)  C (SG: 227)  Pt (SG: 225)  He (SG: 229)

Li$_3$(WO$_3$)$_8$ (SG: 195)  Be$_3$P$_2$ (SG: 206)  Li$_2$Ti$_3$NiO$_8$ (SG: 212)  Sb (SG: 229)

**FIG. 6**

Diffraction pattern analyzing unit — 100

Classification scheme matching unit — 102

Diffraction pattern classifying algorithm learning unit — 104

Probability-based space group inferring unit — 106

Zone axis recommending unit — 600

**FIG. 7**

| Space group | A1-0 | B1-0 | B2-0 | B5-0 | C1-0 | D5-0 | D7-0 | D7-1 | D11-0 |
|---|---|---|---|---|---|---|---|---|---|
| 225 | [001] | | [102] | [104] | [111] | [223] | [101] | | |
| 227 | [001] | | | [223] | [111] | [104] | | [101] | [102] |
| 229 | [001] | [101] | | [223] | [111] | [104] | | | [102] |

**FIG. 8**

```
┌ ─ ─ ─ ─ ─ ─ ─ ─ ─ ─ ─ ─ ┐
│  ┌──────────────────┐   │
│  │                  │   ├── 800
│  │    Table unit    │   │
│  │                  │   │
│  └──────────────────┘   │
│                         │
│                         │
│  ┌──────────────────┐   │
│  │                  │   ├── 802
│  │ Calculation unit │   │
│  │                  │   │
│  └──────────────────┘   │
│                         │
│                         │
│  ┌──────────────────┐   │
│  │  Recommendation  │   ├── 804
│  │      unit        │   │
│  └──────────────────┘   │
└ ─ ─ ─ ─ ─ ─ ─ ─ ─ ─ ─ ─ ┘
```

| | INTERNATIONAL SEARCH REPORT | International application No. |
|---|---|---|
| | | **PCT/KR2022/015355** |

**A.     CLASSIFICATION OF SUBJECT MATTER**

**G01N 23/2055**(2018.01)i; **G01N 23/2251**(2018.01)i; **G06F 18/00**(2023.01)i; **G06V 20/64**(2022.01)i; **G06N 3/08**(2006.01)i

According to International Patent Classification (IPC) or to both national classification and IPC

**B.     FIELDS SEARCHED**

Minimum documentation searched (classification system followed by classification symbols)

G01N 23/2055(2018.01); G06K 9/00(2006.01); G06K 9/62(2006.01); G06N 20/00(2019.01); G06T 5/00(2006.01); H01J 37/145(2006.01); H01J 37/26(2006.01); H01J 37/28(2006.01); H01J 37/295(2006.01); H01L 21/027(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 투과전자현미경(Transmission Electron Microscope, TEM), SADP(Selected Area Diffraction Pattern), 레이블(lable), 결정학(crystallography), 정대축(zone axis), 공간군(space group)

**C.     DOCUMENTS CONSIDERED TO BE RELEVANT**

| Category* | Citation of document, with indication, where appropriate, of the relevant passages | Relevant to claim No. |
|---|---|---|
| X Y A | 안재평 등. 전자현미경의 회절원리와 나노구조분석 응용. 한국고분자학회지: 고분자과학과 기술. vol. 17, no. 4, pp. 493-510, 01 August 2006 (AHN, Jae Pyoung et al. Electron Diffraction and Nanostructural Analysis in Electron Microscope. Journal of the Polymer Society of Korea:Polymer Science and Technology.) <br> See page 494, right column, line 15 – page 499, left column, line 30. | 1,4,8,10,13-14,20 <br> 2-3,5-7,9,11-12 <br> 15-19,21-24 |
| Y | JP 2012-204835 A (ASML NETHERLANDS BV) 22 October 2012 (2012-10-22) <br> See paragraph [0312]. | 2-3,5,9,12 |
| Y | KR 10-2230354 B1 (KOREA UNIVERSITY RESEARCH AND BUSINESS FOUNDATION) 22 March 2021 (2021-03-22) <br> See paragraphs [0042]-[0085]. | 6-7,11-12 |
| A | JP 2012-507838 A (NANOMEGAS SPRL) 29 March 2012 (2012-03-29) <br> See paragraphs [0033]-[0036] and figures 1-2. | 1-24 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 February 2023** | **09 February 2023** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2022/015355**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2017-0120518 A (FEI COMPANY) 31 October 2017 (2017-10-31)<br>See paragraphs [0030]-[0046] and figure 7. | 1-24 |
| PX | KR 10-2405557 B1 (LIGHTVISION CORP.) 07 June 2022 (2022-06-07)<br>See claims 1-2 and figures 1-5.<br>*This document is a published earlier application that serves as a basis for claiming priority of the present international application. | 1-13 |

Form PCT/ISA/210 (second sheet) (July 2022)

**INTERNATIONAL SEARCH REPORT**
Information on patent family members

International application No.

**PCT/KR2022/015355**

| Patent document cited in search report | | | Publication date (day/month/year) | Patent family member(s) | | | Publication date (day/month/year) |
|---|---|---|---|---|---|---|---|
| JP | 2012-204835 | A | 22 October 2012 | CN | 102692823 | A | 26 September 2012 |
| | | | | CN | 102692823 | B | 05 November 2014 |
| | | | | EP | 2515168 | A2 | 24 October 2012 |
| | | | | EP | 2515168 | A3 | 12 December 2012 |
| | | | | EP | 2515168 | B1 | 20 January 2021 |
| | | | | IL | 218588 | A | 31 July 2012 |
| | | | | IL | 218588 | B | 24 September 2015 |
| | | | | JP | 5331221 | B2 | 30 October 2013 |
| | | | | KR | 10-1351453 | B1 | 14 January 2014 |
| | | | | KR | 10-2012-0108949 | A | 05 October 2012 |
| | | | | SG | 184675 | A1 | 30 October 2012 |
| | | | | TW | 201303482 | A | 16 January 2013 |
| | | | | TW | I456337 | B | 11 October 2014 |
| | | | | US | 2013-0066597 | A1 | 14 March 2013 |
| | | | | US | 9116834 | B2 | 25 August 2015 |
| KR | 10-2230354 | B1 | 22 March 2021 | WO | 2021-101069 | A1 | 27 May 2021 |
| JP | 2012-507838 | A | 29 March 2012 | EP | 2351063 | A1 | 03 August 2011 |
| | | | | EP | 2351063 | B1 | 27 January 2016 |
| | | | | EP | 2818852 | A1 | 31 December 2014 |
| | | | | EP | 2818852 | B1 | 02 January 2019 |
| | | | | JP | 2014-142357 | A | 07 August 2014 |
| | | | | JP | 5536085 | B2 | 02 July 2014 |
| | | | | JP | 5839626 | B2 | 06 January 2016 |
| | | | | US | 2011-0220796 | A1 | 15 September 2011 |
| | | | | US | 8253099 | B2 | 28 August 2012 |
| | | | | WO | 2010-052289 | A1 | 14 May 2010 |
| KR | 10-2017-0120518 | A | 31 October 2017 | CN | 107424894 | A | 01 December 2017 |
| | | | | CN | 107424894 | B | 26 March 2021 |
| | | | | KR | 10-2277028 | B1 | 13 July 2021 |
| | | | | US | 2017-0309441 | A1 | 26 October 2017 |
| | | | | US | 9978557 | B2 | 22 May 2018 |
| KR | 10-2405557 | B1 | 07 June 2022 | None | | | |

Form PCT/ISA/210 (patent family annex) (July 2022)